# EUROPÄISCHE PATENTANMELDUNG

(11) **EP 4 657 346 A1**
(43) Veröffentlichungstag der Anmeldung: **03.12.2025**
(21) Anmeldenummer: 25167680.5
(22) Anmeldetag: 01.04.2025
(51) Int. Cl.: G06Q 10/0631, G06Q 50/02, A01D 34/00

(54) **PLANUNGSSYSTEM**

(30) Priorität: 27.05.2024 DE 102024114799
(71) Anmelder: CLAAS Selbstfahrende Erntemaschinen GmbH, 33428 Harsewinkel (DE)
(72) Erfinder: Verploegen, Thijs, 40625 Düsseldorf (DE); Peters, Stefan, 48147 Münster (DE); Fischer, Josef, 88400 Biberach (DE); Wieckhorst, Jan Carsten, 29525 Uelzen Orsteil Hanstedt 2 (DE); Redenius, Jannik, 32361 Pr. Oldendorf (DE); Schröder, Axel, 33332 Gütersloh (DE); Hülsmann, Felix, 33615 Bielefeld (DE); Monkenbusch, Robin, 33378 Rheda-Wiedenbrück (DE)
(74) Vertreter: CLAAS Gruppe

(57) **Zusammenfassung**

Die vorliegende Erfindung betrifft ein Planungssystem (1), umfassend eine Benutzerschnittstelle (2), eine Kommunikationseinheit (3), eine Recheneinheit (4) und eine Speichereinheit (5), wobei das Planungssystem (1) dazu eingerichtet ist, eine Planung (6) zur Durchführung eines landwirtschaftlichen Gesamtprozesses (19) oder zumindest eines vom Gesamtprozess (19) umfassten Teilprozesses (20) zu generieren und an eine für die Durchführung eingerichtete autonome landwirtschaftliche Arbeitsmaschine (7) zur Steuerung, Regelung und/oder Parametrisierung der autonomen Arbeitsmaschine (7) und zumindest eines an der Arbeitsmaschine (7) adaptierten Anbaugerätes (8) zu übertragen, wobei die Benutzerschnittstelle (2) dazu eingerichtet ist, eine in der Speichereinheit (5) hinterlegte und/oder hinterlegbare Übersicht landwirtschaftlicher Gesamtprozesse (19) sowie von diesen umfasste Teilprozesse (20) zumindest einer Erntekampagne (18) einem Bediener (16) anzuzeigen und zur individuellen Auswahl zu stellen, wobei das Planungssystem (1) dazu eingerichtet ist, nach Auswahl eines Gesamtprozesses (19) oder eines Teilprozesses (20) und Auswahl von einer aus mehreren in der Speichereinheit (5) hinterlegten und/oder hinterlegbaren Strategievorgaben (22) in Abhängigkeit der ausgewählten Strategievorgabe (22) Einstell- und/oder Effizienzparameter zur Steuerung, Regelung und/oder Parametrisierung der zumindest einen autonomen Arbeitsmaschine (7) und des zumindest einen Anbaugerätes (8) zu generieren.

## Beschreibung

Die vorliegende Erfindung betrifft ein Planungssystem gemäß dem Oberbegriff des Anspruches 1.

Aus der DE 10 2022 110 132 A1 ist ein auf Datenaustausch basierendes Assistenzsystem bekannt, welches ein für den Einsatz geeignetes autonomes Fahrzeugs, das als landwirtschaftliche Arbeitsmaschine agiert, konfiguriert und den Einsatz plant sowie dem Fahrzeug die für den Einsatz erforderlichen Daten übermittelt und das Fahrzeug steuert und den Arbeitsbetrieb überwacht. Hierzu wird ein manuell erstellter kundenspezifischer Einsatzplan an das Assistenzsystem übertragen, welcher eine durch das autonome Fahrzeug zu erbringende Dienstleitung nach Art und Umfang beschreibt. Hierfür stellt ein Auftraggeber den kundenspezifischen Einsatzplan bereit. Dabei wird die jeweilige Einsatzzeit vorgegeben, nämlich zumindest der Zeitraum in welchem die Dienstleistung zu erbringen ist. Im Übrigen beschränkt sich der vorgebbare kundenspezifische Einsatzplan auf den oder die Einsatzorte sowie die Reihenfolge und Art der durchzuführenden Arbeitstätigkeiten.

Die Kommunikation des Auftraggebers mit dem Assistenzsystem erfolgt durch eine externe Schnittstelle oder über eine Plattform, mittels der ein kundenspezifischer Einsatzplan konfigurierbar und an das Assistenzsystem übertragbar ist. Der vorgegebene kundenspezifische Einsatzplan basiert auf Eingaben des Auftraggebers. Die aus dem kundenspezifischen Einsatzplan abgeleitete Konfiguration, welches Fahrzeug mit welchen Steuerungsdaten zur Anwendung kommt, obliegt dabei dem Assistenzsystem. Die daraus resultierende durch das Assistenzsystem erstellte Konfiguration des als landwirtschaftliche Arbeitsmaschine agierenden autonomen Fahrzeugs und die Einsatzplanung sind für den Auftraggeber intransparent. Insbesondere die Einflussnahme auf die Erstellung der Konfiguration ist signifikant beschränkt.

Ausgehend vom vorstehend genannten Stand der Technik liegt der Erfindung die Aufgabe zugrunde, ein Planungssystem bereitzustellen, welches eine vorausplanende Konfiguration autonomer landwirtschaftlicher Arbeitsmaschinen unter Einbeziehung eines Bedieners ermöglicht, wobei dem Bediener bei der Erstellung der Planung ein größerer Einfluss auf den Planungsprozess ermöglicht wird.

Diese Aufgabe wird erfindungsgemäß durch ein Planungssystem mit den Merkmalen des Anspruches 1 gelöst. Vorteilhafte Weiterbildungen sind Gegenstand der abhängigen Ansprüche.

Gemäß dem Anspruch 1 wird ein Planungssystem vorgeschlagen, welches eine Benutzerschnittstelle, eine Kommunikationseinheit, eine Recheneinheit und eine Speichereinheit umfasst. Das Planungssystem ist dazu eingerichtet, eine Planung zur Durchführung eines landwirtschaftlichen Gesamtprozesses oder zumindest eines vom Gesamtprozess umfassten Teilprozesses zu generieren und an eine für die Durchführung eingerichtete autonome landwirtschaftliche Arbeitsmaschine zur Steuerung, Regelung und/oder Parametrisierung der autonomen Arbeitsmaschine und zumindest eines an der Arbeitsmaschine adaptierten Anbaugerätes zu übertragen. Erfindungsgemäß ist vorgesehen, dass die Benutzerschnittstelle dazu eingerichtet sein, eine in der Speichereinheit hinterlegte und/oder hinterlegbare Übersicht landwirtschaftlicher Gesamtprozesse sowie von diesen umfasste Teilprozesse zumindest einer Erntekampagne einem Bediener anzuzeigen und zur individuellen Auswahl zu stellen, wobei das Planungssystem dazu eingerichtet ist, nach einer Auswahl eines Gesamtprozesses oder eines Teilprozesses und einer Auswahl von einer aus mehreren in der Speichereinheit hinterlegten und/oder hinterlegbaren Strategievorgaben in Abhängigkeit der ausgewählten Strategievorgabe Einstell- und/oder Effizienzparameter zur Steuerung, Regelung und/oder Parametrisierung der zumindest einen autonomen Arbeitsmaschine und des zumindest einen Anbaugerätes zu generieren.

Mit dem Planungssystem können alle relevanten Parameter und Einstellungen systemtechnisch von der autonomen Arbeitsmaschine und dem daran adaptierten Anbaugerät unabhängig und vor dem geplanten Einsatz der autonomen Arbeitsmaschine generiert werden. Der Bediener des Planungssystems wird mittels der Benutzerschnittstelle in den Planungsprozess einbezogen. Durch die Auswahl der Strategievorgabe bestimmt der Bediener den Schwerpunkt der zu generierenden Planung und der Optimierung aller mit der Strategievorgabe verbundenen Einstell- und/oder Effizienzparameter der autonomen Arbeitsmaschine und des daran adaptierten Anbaugerätes.

Insbesondere kann das Planungssystem dabei auf spezifisches Prozesswissen zugreifen, welches in der zumindest einen Datenbank hinterlegt oder hinterlegbar ist, um eine optimierte Planung und von der zu erstellenden Planung umfasste Einstell- und/oder Effizienzparameter zu generieren.

Bevorzugt kann das Planungssystem cloudbasiert oder lokal servergestützt ausgeführt sein.

Die autonome landwirtschaftliche Arbeitsmaschine kann einerseits spezialisiert ausgeführt sein, wie es beispielsweise ein autonomer Mähdrescher oder Feldhäcksler wären, oder andererseits generalisiert. Generalisiert heißt dabei, dass es sich bei der autonomen landwirtschaftlichen Arbeitsmaschine um eine autonome landwirtschaftliche Universal-Arbeitsmaschine handelt, welche sich durch wechselnde Konfigurationen der Anbaugeräte und wechselnde Softwarebausteine zur Ansteuerung der Arbeitsmaschine und/oder der Anbaugeräte auszeichnet, um für eine Vielzahl unterschiedlicher landwirtschaftlicher Arbeitsaufgaben verwendet werden zu können.

Die einzelnen Gesamtprozesse und/oder die hiervon umfassten Teilprozesse einer durch den Bediener auswählbaren landwirtschaftlichen Erntekampagne folgen dabei bedarfsweise aufeinander, beispielsweise abhängig von der Art des Ernteguts, von Umgebungsbedingungen und/oder einer Zielsetzung eines der Erntekampagne zugrundeliegenden Ernteprozesses.

Bevorzugt kann das Planungssystem dazu eingerichtet sein, die verfügbare Auswahl von Strategievorgaben in Abhängigkeit von dem vorzugebenen respektive auszuwählenden Gesamtprozess oder Teilprozess, der Verfügbarkeit von autonomen Arbeitsmaschinen und/oder an diese adaptierbaren Anbaugeräten im Planungszeitraum und in Abhängigkeit von äußeren Bedingungen zu beschränken. Die Beschränkung der verfügbaren Auswahl ist vorrangig hinsichtlich der inhaltlichen Bewertung zu verstehen. Dem Bediener sollen nur die Strategievorgaben zur Auswahl gestellt werden, die im Kontext mit dem vorzugebenden Gesamtprozess oder Teilprozess einer Erntekampagne sinnvoll nutzbar sind.

Insbesondere können die Strategievorgaben Optimierungskriterien aufweisen, welche Effizienz, Leistung, Qualität, Bodenschonung, Kosten, Ressourcenverfügbarkeit und/oder Verluste umfassen. Beispielsweise sind die Prämissen bei der Ausbringung von Saatgut als Teilprozess an die Effizienz der Durchführung andere als dies beim Vorgang des Erntens als Teilprozess der Fall ist.

Gemäß einer Weiterbildung kann die Benutzerschnittstelle zur Eingabe und/oder Auswahl zumindest eines durchzuführenden Gesamtprozesses oder Teilprozesses sowie einer damit verbundenen Route eingerichtet sein, wobei das Planungssystem dazu eingerichtet sein kann, unter Verwendung von in der zumindest einer Datenbank hinterlegten topografischen Daten eines Feldes, auf welchem der für die autonome Arbeitsmaschine zu planende Gesamtprozess oder Teilprozess durchzuführen ist, und den korrespondierenden feldspezifischen Parametern des Feldes ein digitales Abbild des Feldes zu generieren und von den in der zumindest einen Datenbank hinterlegten arbeitsmaschinenspezifischen und Anbaugerätspezifischen Parametern ein digitales Abbild der autonomen landwirtschaftlichen Arbeitsmaschine und des zumindest einem an der Arbeitsmaschine adaptierten Anbaugerätes zu generieren, um mittels eines in der Speichereinheit hinterlegten mathematischen Modells die Durchführung des Gesamtprozesses oder Teilprozesses und ein daraus resultierendes Arbeitsergebnis zu simulieren.

Weiterhin kann das Planungssystem dazu eingerichtet sein, das Arbeitsergebnis und damit verbundene Ergebnisgrößen der simulierten Durchführung mittels der Benutzerschnittstelle auszugeben. Ergebnisgrößen der Simulation sind unter anderem Ressourcenverbrauch, gefahrene Strecke, Arbeitszeit, Arbeitsbeginn und Arbeitsende sowie für das Durchfahren von Vorgewenden erforderliche Parameter. Für das Durchfahren von Vorgewenden erforderliche Parameter umfassen unter anderem einen räumlichen Versatz zu einer georeferenzierten Feldgrenze, eine Anzahl von parallel gestaffelten Vorgewendeabschnitten respektive Vorgewendesequenzen und/oder eine Arbeitsbreite. Dabei kann die Simulation feldspezifische Gegebenheiten, wie Hindernisse oder dergleichen, berücksichtigen, die Einfluss auf die Ergebnisgrößen haben.

Des Weiteren kann das Planungssystem dazu eingerichtet sein, das Arbeitsergebnis beeinflussende Umgebungs- und Umweltparameter im Zeitpunkt der Simulation zu berücksichtigen und in Abhängigkeit vom Einflussgrad der Umgebungs- und Umweltparameter auf das Arbeitsergebnis Vorschläge zur Optimierung der Einstell- und/oder Effizienzparameter auszugeben.

Weiter bevorzugt kann das Planungssystem dazu eingerichtet sein, die Simulation unter Berücksichtigung der in der Speichereinheit hinterlegten und/oder hinterlegbaren Strategievorgaben, insbesondere hinsichtlich einer Optimierung der Bearbeitungsleistung, Bearbeitungseffizienz und/oder Bearbeitungsqualität, durchzuführen. Es können dabei die Ergebnisse von Simulationen unter Berücksichtigung mehrerer Strategievorgaben einander gegenübergestellt werden.

Insbesondere kann das Planungssystem dazu eingerichtet sein, in Abhängigkeit von der Auswahl des zumindest einen Gesamtprozesses und/oder des zumindest einen Teilprozesses automatisch eine Datenbasis geeigneter und verfügbarer autonomer Arbeitsmaschinen und an die Arbeitsmaschinen adaptierbarer Anbaugeräte zu erstellen und die Datenbasis mittels der Benutzerschnittstelle zu visualisieren und zur individuellen Auswahl zu stellen.

Dabei kann das Planungssystem dazu eingerichtet sein, automatisch zumindest einen Vorschlag für eine Kombination aus wenigstens einer geeigneten und verfügbaren autonomen Arbeitsmaschine und wenigstens einem daran adaptierbaren Anbaugerät zu generieren und mittels der Benutzerschnittstelle individuell auswählbar zu visualisieren.

Gemäß einer bevorzugten Weiterbildung kann das Planungssystem zur Abarbeitung eines in der Speichereinheit hinterlegten oder hinterlegbaren taktischen Lösungsweges eingerichtet sein, welcher eine optimierte Routenplanung und Vorgaben für optimierte Einstell- und/oder Effizienzparameter umfasst.

Bevorzugt kann das Planungssystem dazu eingerichtet sein, die generierte Planung vor der Durchführung des geplanten Gesamtprozesses oder Teilprozesses, insbesondere innerhalb eines vorgebbaren zeitlichen Abstands vor der Durchführung, mittels der Benutzerschnittstelle zu visualisieren.

Insbesondere kann das Planungssystem dazu eingerichtet sein, automatisch zu prüfen, ob in der zumindest einen Datenbank eine Aktualisierung der Daten erfolgt ist, welche im Zeitpunkt der Generierung der Planung verwendet wurden, und dies mittels der Benutzerschnittstelle zu visualisieren. Somit kann der Bediener durch das Planungssystem darauf hingewiesen werden, dass Änderungen von Daten vorliegen können, die Einfluss auf die generierte Planung haben.

Gemäß einer Weiterbildung kann das Planungssystem dazu eingerichtet sein, bei der Generierung der Planung dem durchzuführenden Gesamtprozess oder Teilprozess zeitlich vorgelagerte und/oder nachgelagerte Gesamtprozesse oder Teilprozesses und/oder eine in einem zeitlich vorgelagerten Gesamtprozess oder Teilprozess generierte Routenplanung und/oder durch eine landwirtschaftliche Arbeitsmaschine abgefahrene Route zu berücksichtigen.

Bevorzugt kann das Planungssystem dazu eingerichtet sein, automatisch einen Vorschlag für die zu generierende Planung für den durchzuführenden Gesamtprozess oder Teilprozess basierend auf von in einem in der Vergangenheit liegenden Vergleichszeitraum manuell erfassten Daten desselben Gesamtprozesses oder Teilprozesses an derselben Lokation und/oder basierend auf Vergleichsdaten desselben Gesamtprozesses oder Teilprozesses an zumindest einer anderen Lokation zu generieren und mittels der Benutzerschnittstelle zur Auswahl zu stellen.

Weiterhin kann das Planungssystem dazu eingerichtet sein, die Vergleichsdaten desselben an mehreren anderen Lokationen durchgeführten Gesamtprozesse oder Teilprozesse auszuwerten und für die jeweiligen Daten Mittelwerte zu bilden und/oder die der Durchführung eines Gesamtprozesses oder Teilprozesses zugrundeliegenden Vergleichsdaten einer Lokation mit maximalem Ertrag zu bestimmen und die auf Mittelwerten und/oder maximalem Ertrag basierenden Daten zur Generierung der Planung zu verwenden.

Eine weitere Möglichkeit zur Generierung der optimierten Planung durch das Planungssystem besteht darin, dass das Planungssystem vorhandene Vergleichsdaten mittels künstlicher Intelligenz analysiert. Dazu kann das Planungssystem ein künstliches neuronales Netzwerk verwenden, um die an einer oder mehrerer Lokationen erhobenen Vergleichsdaten für eine spezifische Erntekampagne und/oder einen spezifischen Gesamtprozess und/oder einen spezifischen Teilprozess, welche die in der Vergangenheit verwendeten arbeitsmaschinenspezifischen, anbaugerätespezifischen und feldspezifischen Parameter sowie Umgebungs- und Umweltparameter repräsentieren, als Eingangsdatensatz auszuwerten und als Ausgangsdaten die darauf basierende Planung zu generieren.

Insbesondere kann zur Analyse der Vergleichsdaten ein in der Recheneinheit hinterlegter, auf künstlicher Intelligenz basierender, trainierbarer Analysealgorithmus verwendet werden. Der lernfähige Analysealgorithmus kann beispielsweise auf einem trainierten künstlichen neuronalen Netz, vorzugsweise ein Artificial Neural Network, ein sogenanntes ANN, oder ein Convolutional Neural Network, ein sogenanntes CNN, basieren. Auch andere trainierbare Kl-Architekturen sind gleichermaßen als Basis für den Analysealgorithmus vorstellbar.

Arbeitsmaschinenspezifische und anbaugerätspezifische Parameter der autonomen landwirtschaftlichen Arbeitsmaschine sowie des daran adaptierten Anbaugerätes sind insbesondere Geometriedaten, Betriebszustandsdaten und/oder Ausstattungsdaten.

Feldspezifische Parameter sind unter anderem Bodendaten, einschließlich Daten zur Bodenverdichtung und/oder Daten zur Bodenaufbereitung, Bestandsdaten, einschließlich pflanzenbaulicher Spezifika, wie Daten zur Verunkrautung, Daten zu Krankheiten und Daten zu einem Schädlingsbefall, Ertragsdaten und/oder Flächendaten, einschließlich landwirtschaftlicher Kennzahlen, wie Daten zur Düngung, Daten zur Bewässerung, Daten zu Herbiziden und Daten zu Fungiziden, Geodaten und/oder Wetterdaten, einschließlich langfristigerer Klimadaten.

Die vorliegende Erfindung wird nachstehend anhand eines in den Zeichnungen dargestellten Ausführungsbeispieles näher erläutert.

Es zeigen:

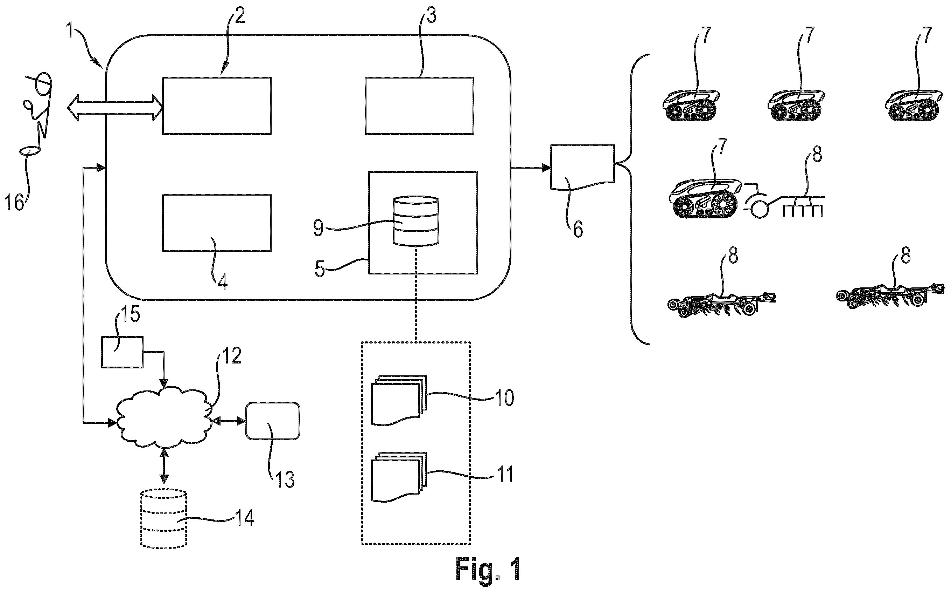

- Fig. 1: schematisch und exemplarisch eine Darstellung eines Planungssystems;
- Fig. 2: schematisch und exemplarisch eine Ansicht einer Benutzeroberfläche der Benutzerschnittstelle des Planungssystems;
- Fig. 3: schematisch und exemplarisch eine Ansicht der Benutzeroberfläche nach erfolgter Auswahl einer Erntekampagne;
- Fig. 4: schematisch und exemplarisch durch das Planungssystem generierte Routendetails für ein bearbeitendes Feld; und
- Fig. 5: schematisch und exemplarisch dem zu bearbeitenden Feld zugeordnete simulierte Routenpläne.

Das Planungssystem 1 umfasst eine Benutzerschnittstelle 2, eine Kommunikationseinheit 3, eine Recheneinheit 4 und eine Speichereinheit 5. Das Planungssystem 1 ist dazu eingerichtet, eine Planung 6 zur Abarbeitung einer landwirtschaftlichen Erntekampagne 18, die durch einen Gesamtprozess 19 bestimmt ist, der zumindest einen Teilprozess 20 aufweist, zu generieren. Die Planung 6 wird mittels der Kommunikationseinheit 3 an zumindest eine für die Durchführung eingerichtete autonome landwirtschaftliche Arbeitsmaschine 7 zur Steuerung, Regelung und/oder Parametrisierung der autonomen Arbeitsmaschine 7 und zumindest eines an der Arbeitsmaschine 7 adaptierten Anbaugerätes 8 übertragen.

Das Planungssystem 1 ist dazu eingerichtet, zur vorausplanenden Generierung der Planung 6 für den Betrieb der autonomen Arbeitsmaschine 7 in zumindest einer Datenbank 9 hinterlegte Daten abzurufen und zu verwenden, welche im Zeitpunkt der Generierung der Planung 6 verfügbare arbeitsmaschinenspezifische, anbaugerätespezifische und feldspezifische Parameter 10 sowie Umgebungs- und Umweltparameter 11 sind.

Der Zugriff auf die Benutzerschnittstelle 2 durch einen Bediener 16 kann vorzugsweise webbasierend, insbesondere durch eine mittels Internetbrowser ausführbare Webseite 13, erfolgen, sodass ein berechtigungsabhängiger Zugriff auf das Planungssystem 1 über ein Netzwerk 12 erfolgen kann.

Über das Netzwerk 12 erfolgt der Zugriff des Planungssystems 1 auf zumindest eine externe Datenquelle 14. Bei der externen Datenquelle 14 kann es sich ebenfalls um eine Datenbank handeln und /oder ein Farmmanagementsystem 15.

So kann das Planungssystem 1 auf der Basis von in der Datenbank 9 und/oder im Farmmanagementsystem 15 hinterlegten Informationen und Daten, die von dem Planungssystem 1 abgerufen werden, eine oder mehrere Erntekampagnen 18 abbilden. Die Informationen und Daten umfassen beispielsweise Angaben zu bearbeitbaren Feldern F, zu im landwirtschaftlichen Fuhrpark eines Betriebes enthaltenen autonomen Arbeitsmaschinen 7 und daran adaptierbaren Anbaugeräten 8 sowie deren jeweilige Verfügbarkeit. Der Gesamtprozess 19 und/oder die hiervon umfassten Teilprozesse 20 einer landwirtschaftlichen Erntekampagne 18 folgen dabei bedarfsweise, beispielsweise abhängig von der Art des Ernteguts, von Umgebungsbedingungen und/oder einer Zielsetzung eines der Erntekampagne 18 zugrundeliegenden Anbau-, Bearbeitungs-, und/oder Ernteprozesses, aufeinander.

Mittels der Benutzerschnittstelle 2 kann der Bediener 16 des Planungssystems 1 zunächst die Erntekampagne 18 und im Anschluss den Gesamtprozess 19 und/oder den Teilprozess 20 auswählen, um diese bzw. diesen zu planen. So kann eine auswählbare Erntekampagne 18 respektive der Gesamtprozess 19 beispielsweise alle das Anbauen bis zum Ernten von Getreide beinhaltenden Teilprozesse 20 umfassen. Alternativ kann der Bediener 16 zumindest einen einzelnen Teilprozess 20, beispielsweise das Durchführen von Bodenbearbeitung, Aussaat, Düngung, Pflanzenschutzmaßnahmen, Ernten, Transportieren und/oder dergleichen auswählen, um hierfür die Planung 6 zu erstellen. Die vorstehende Aufzählung der auswählbaren Teilprozesse 20 ist nicht abschließend zu verstehen.

Das Planungssystem 1 ist dazu eingerichtet, die zu erstellende Planung 6 und von der zu erstellenden Planung 6 umfasste Einstell- und/oder Effizienzparameter zur Steuerung, Regelung und/oder Parametrisierung der zumindest einen autonomen Arbeitsmaschine 7 und des zumindest einen Anbaugerätes 8 mittels interaktiver natürlichsprachiger Kommunikation über die Benutzerschnittstelle 2 zwischen dem Bediener 16 und dem Planungssystem 1 zu optimieren.

Das Planungssystem 1 kann dazu eingerichtet sein, auf zumindest einen Planungsvorgang einer in der Vergangenheit liegenden Planung, insbesondere eine Vorjahresplanung, zuzugreifen und daraus dem durchzuführenden Gesamtprozess 19 und/oder Teilprozess 20 die Planung des historischen Planungsvorgangs zuzuordnen, die dem korrespondierenden Gesamtprozess 19 und/oder Teilprozess 20 in der Vergangenheit bereits zugrunde lag oder diesem am nächsten kommt. Die in der Vergangenheit erstellte Planung kann dabei eine Grundlage bilden, die durch das Planungssystem 1 entsprechend der im Zeitpunkt der Generierung der durchzuführenden Planung 6 verfügbaren arbeitsmaschinenspezifischen, anbaugerätespezifischen und feldspezifischen Parameter 10 sowie Umgebungs- und Umweltparameter 11 modifiziert wird.

So kann das Planungssystem 1 dazu eingerichtet sein, bei der Generierung der Planung 6 dem durchzuführenden Teilprozess 20 zeitlich vorgelagerte und/oder nachgelagerte Teilprozesse 20 und/oder eine in einem zeitlich vorgelagerten Teilprozess 20 generierte Routenplanung und/oder durch eine landwirtschaftliche Arbeitsmaschine 7 bereits abgefahrene Route zu berücksichtigen. Die in einem zeitlich dem zu planenden Teilprozess 20 vorgelagerten Teilprozess 20 bereits generierte Routenplanung kann durch eine bemannte Arbeitsmaschine und/oder eine autonome Arbeitsmaschine 7 aufgezeichnet worden sein. Dabei können beispielsweise in einem vorgelagerten Teilprozess 20, beispielsweise der Aussaat, bereits erzeugte bzw. bestehende Fahrgassen verwendet werden, um deren Lage bei dem zu planenden Teilprozess 20 der Durchführung einer Pflanzenschutzmaßnahme durch die ausführende Arbeitsmaschine 7 und das daran adaptierte Anbaugerät 8 zu berücksichtigen. Das voranstehende Beispiel ist exemplarisch zu verstehen; eine analoge Anwendung wäre beispielsweise bei einer Erntekampagne 18 denkbar, welche die Erzeugung von Futtermittel zum Gegenstand hat.

Gemäß einem weiteren Aspekt kann das Planungssystem 1 dazu eingerichtet sein, automatisch einen Vorschlag für die zu generierende Planung 6 für den durchzuführenden Gesamtprozess 19 und/oder Teilprozess 20 basierend auf von in einem in der Vergangenheit liegenden Vergleichszeitraum, vorzugsweise Vorjahreszeitraum, erfassten Daten desselben Gesamtprozesses 19 und/oder Teilprozesses 20 an derselben Lokation zu generieren und mittels der Benutzerschnittstelle 2 dem Bediener 17 zur Auswahl zu stellen. Hierdurch wird eine Vereinfachung bei der Erstellung der Planung 6 erreicht. Die Erfassung und/oder Bereitstellung von Vergleichsdaten, die in einem in der Vergangenheit liegenden Vergleichszeitraum angefallen sind, kann durch eine bemannte Arbeitsmaschine und/oder autonome Arbeitsmaschine 7 und/oder eine manuelle Eingabe erfolgt sein. Die Vergleichsdaten können dabei sowohl in der zumindest einen Datenbank 9 des Planungssystems 1 als auch in der externen Datenquelle 14, insbesondere dem Farmmanagementsystem 15, abrufbar hinterlegt sein.

Eine weitere Möglichkeit ergibt sich daraus, dass das Planungssystem 1 dazu eingerichtet ist, automatisch einen Vorschlag für die zu generierende Planung 6 für den durchzuführenden Gesamtprozess 19 und/oder Teilprozess 20 basierend auf Vergleichsdaten desselben Gesamtprozesses 19 und/oder Teilprozesses 20 an zumindest einer anderen Lokation zu generieren und mittels der Benutzerschnittstelle 2 zur Auswahl zu stellen. Dies ermöglicht es dem Bediener 16, beim Fehlen von Vergleichsdaten für das konkret zu bearbeitende Feld F zumindest einen Vorschlag für die zu generierende Planung 6 zu erhalten oder diesen Vorschlag mit den Vergleichsdaten für den in der Vergangenheit liegenden Vergleichszeitraum des betreffenden Feldes F zu vergleichen.

Gemäß einem weiteren Aspekt kann das Planungssystem 1 dazu eingerichtet sein, die Vergleichsdaten desselben an mehreren anderen Lokationen durchgeführten Gesamtprozesses 19 und/oder Teilprozesses 20 auszuwerten und für die jeweiligen Daten Mittelwerte zu bilden und/oder die der Durchführung eines Gesamtprozesses 19 und/oder Teilprozesses 20 zugrundeliegenden Vergleichsdaten einer Lokation mit maximalem Ertrag zu bestimmen und die auf Mittelwerten und/oder maximalem Ertrag basierenden Daten zur vorausplanenden Generierung der Planung 6 zu verwenden.

Eine weitere Möglichkeit zur Generierung der optimierten Planung 6 durch das Planungssystem 6 besteht darin, dass das Planungssystem 1 vorhandene Vergleichsdaten mittels künstlicher Intelligenz analysiert. So kann das Planungssystem 1 ein künstliches neuronales Netzwerk verwenden, um die Vergleichsdaten, welche die in der Vergangenheit verwendeten arbeitsmaschinenspezifischen, anbaugerätespezifischen und feldspezifischen Parameter 10 sowie Umgebungs- und Umweltparameter 11 repräsentieren, als Eingangsdatensatz auszuwerten und als Ausgangsdaten die darauf basierende Planung 6 zu bestimmen.

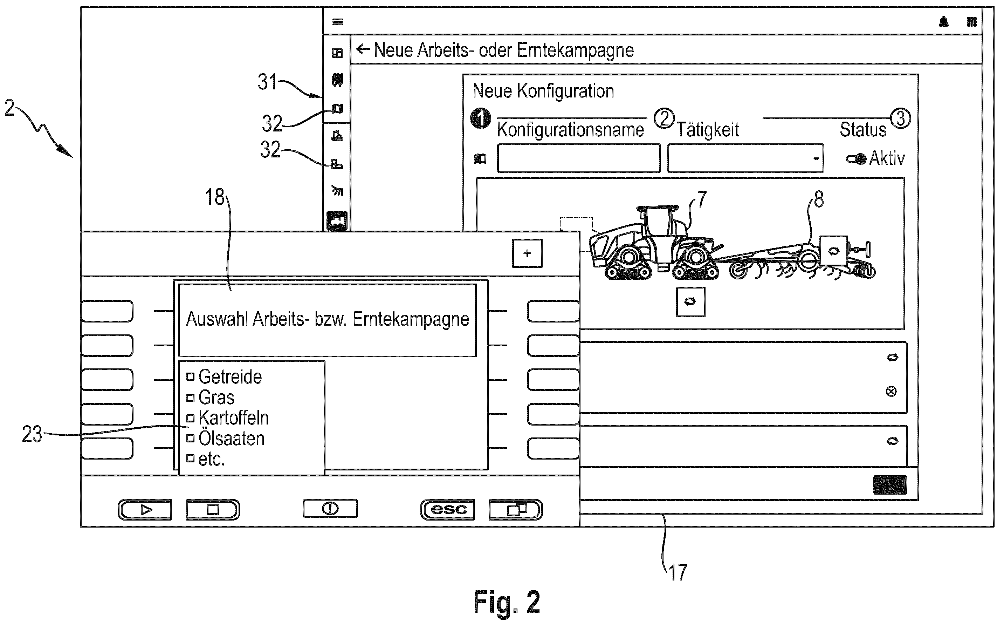

In Fig. 2 ist schematisch und exemplarisch eine Ansicht einer Benutzeroberfläche 17 der Benutzerschnittstelle 2 des Planungssystems 1 dargestellt. Die Benutzerschnittstelle 2 ist dazu eingerichtet, dem Bediener 16 zumindest eine in der Speichereinheit 5 hinterlegte und/oder hinterlegbare Übersicht landwirtschaftlicher Erntekampagnen 18 anzuzeigen und zur individuellen Auswahl zu stellen. Hierzu wird in einem Anzeigesegment 23 eine Übersicht der landwirtschaftlichen Erntekampagnen 18 angezeigt, die durch den Bediener 16 auswählbar sind.

In einer Spalte 31 der Benutzeroberfläche 17 sind verschiedene Icons 32 arrangiert, welche unterschiedliche Menüoptionen umfassen. Im dargestellten Ausführungsbeispiel ist die ausgewählte Menüoption "Neue Arbeits- oder Erntekampagne" aktiv. Es kann auch eine bereits bestehende "Arbeits- oder Erntekampagne" geladen werden, was sich in einer Änderung der aktiven Menüoption widerspiegelt.

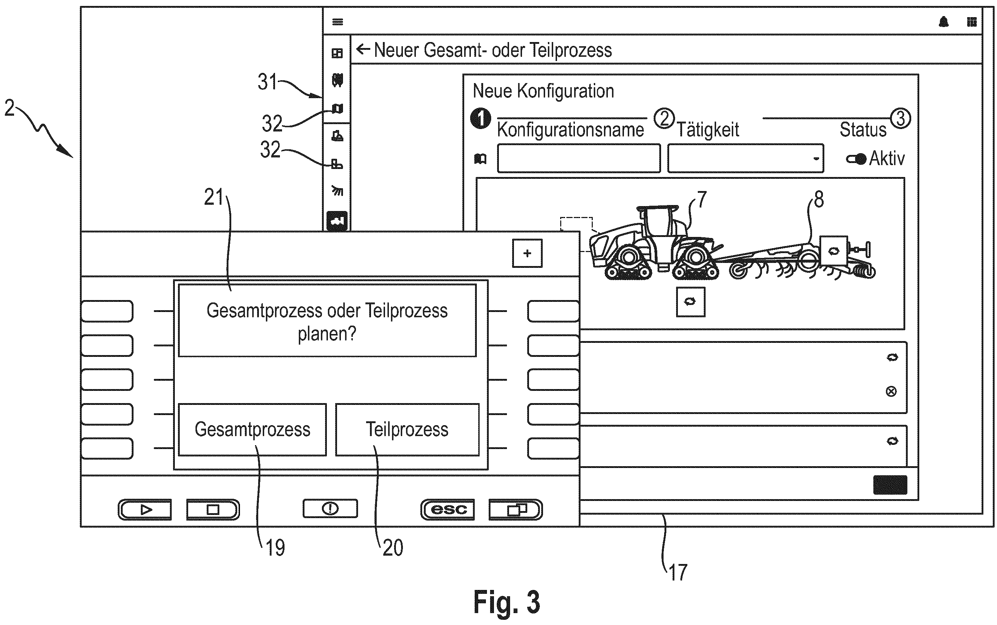

In Fig. 3 ist schematisch und exemplarisch eine Ansicht der Benutzeroberfläche 17 der Benutzerschnittstelle 2 nach erfolgter Auswahl einer Erntekampagne 18 dargestellt. Auf Basis der Auswahl der Erntekampagne 18 durch den Bediener 16 erfolgt im nächsten Schritt des interaktiven Dialogs des Planungssystems 1 mit dem Bediener 16 mittels eines Abfragedialogs 21 die Auswahl, ob der Gesamtprozess 19 der ausgewählten Erntekampagne 18 oder zumindest ein Teilprozess 20 der Erntekampagne 18 zu planen ist. Im dargestellten Ausführungsbeispiel ist die ausgewählte Menüoption "Neuer Gesamt- oder Teilprozess" als aktiv dargestellt.

Dem durchzuführenden Gesamtprozess 19 und/oder dem zumindest einen Teilprozess 20 der ausgewählten Erntekampagne 19 wird eine durch den Bediener 16 in einem nachfolgenden Abfragedialog 21 auswählbare Bearbeitungsstrategie zugrunde gelegt. Insbesondere ist das Planungssystem 1 dazu eingerichtet, eine Simulation der Planung 6 unter Berücksichtigung der in der Speichereinheit 5 hinterlegten und/oder hinterlegbaren Bearbeitungsstrategien, insbesondere hinsichtlich einer Optimierung der Bearbeitungsleistung, Bearbeitungseffizienz und/oder Bearbeitungsqualität, durchzuführen.

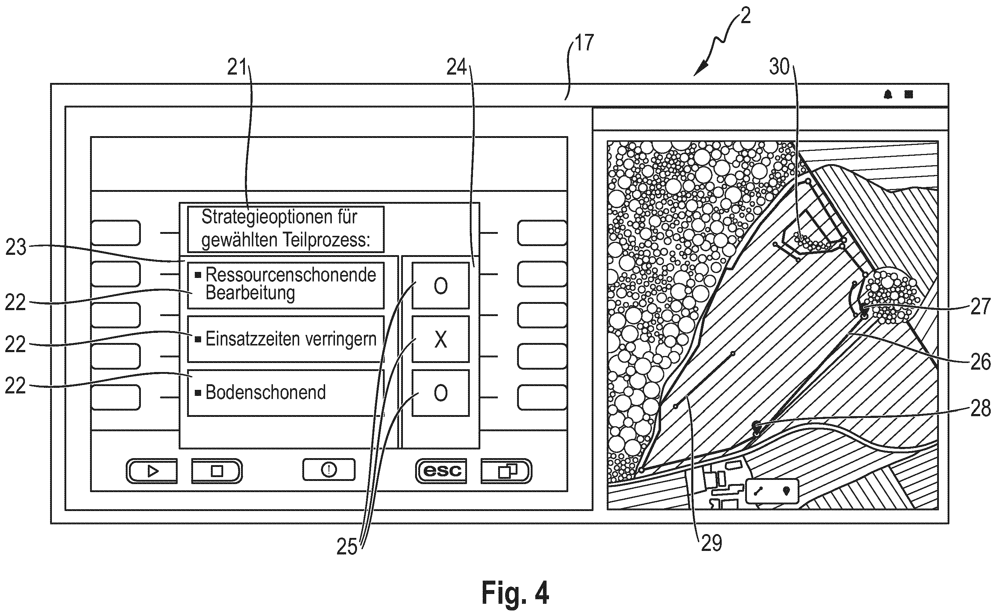

Hierzu kann, wie in Fig. 4 exemplarisch dargestellt, mittels der grafischen Benutzeroberfläche 17 eine mögliche Auswahl an natürlichsprachigen Strategieoptionen 22 für die auswählbaren Bearbeitungsstrategien in einem Anzeigesegment 23 der grafischen Benutzeroberfläche 17 dargestellt werden, welche mit den in der Speichereinheit 5 hinterlegten und/oder hinterlegbaren Bearbeitungsstrategien korrespondieren. Mittels des weiteren Abfragedialogs 21 werden die Strategieoption 22 zur Auswahl gestellt. Jeder dargestellten natürlichsprachigen Strategieoption 22 ist in einem Auswahlfenster 24 eine Checkbox 25 zugeordnet, die durch den Bediener 16 gemäß der von ihm getroffenen Auswahl aktiviert wird. Die in Fig. 4 dargestellten Strategieoptionen 22 sind dabei nicht als abschließende Aufzählung zu verstehen.

In Fig. 4 ist weiterhin eine schematische Darstellung von durch das Planungssystem 1 generierten Routendetails für das zu bearbeitende Feld F als ein Teil der Planung 6, welche mittels der Benutzerschnittstelle 2 ausgegeben wird, dargestellt.

Hierzu gibt das Planungssystem 1 beispielsweise für den Teilprozess 20 Bodenbearbeitung als Teil der Planung 6 feldspezifische Parameter aus. Bei den feldspezifischen Parametern kann es sich um die Darstellung einer Feldgrenze 26 eines in vorangehenden Schritt ausgewählten bearbeitenden Feldes F, wie anhand von Fig. 2 erläutert, um Angaben eines Startpunkt 27 und eines Endpunkt 28 zur Ableitung zumindest einer Referenzlinie 29 handeln. Weitere Parameter bilden eine durch die Feldgrenze 26 vorgegebene Feldkontur sowie Hindernisse 30 auf dem Feld F. Die in Fig. 3 auf die Routenplanung bezogene Darstellung kann auf in der Datenbank 9 hinterlegten Daten zu diesem spezifischen Feld F beruhen, welche, wie weiter oben bereits ausgeführt, der Simulation zugrunde liegen können.

Weiterhin werden für die Routenplanung erforderliche Parameter vorgegeben und angezeigt, beispielsweise ein einzuhaltender Abstand zur Feldgrenze 26, eine Arbeitsbreite des Anbaugerätes 8, eine Anzahl an Vorgewendesequenzen. Diese Parameter sind durch den Bediener 16 veränderbar.

Die auswählbaren Strategieoptionen 22, hier "Ressourcenschonende Bearbeitung", "Einsatzzeit verringern" oder "Bodenschonend", bilden Eingangsgrößen für eine durch das Planungssystem 1 zu erstellende Logistikplanung. Ein durch das Planungssystem 1 erstellter Logistikplan bildet einen weiteren Teil der Planung 6. Dem liegen unter anderem die Erstellung und Auswahl von im Planungszeitpunkt geeigneten und verfügbaren Kombinationen von autonomen landwirtschaftlichen Arbeitsmaschinen 7 und den daran adaptierbaren Anbaugeräten 8 durch das Planungssystem 1 zugrunde.

Ein weiterer Aspekt besteht in der Simulation der abzuarbeitenden Erntekampagne 18 oder des durchzuführenden Gesamtprozesses 19 durch zumindest eine für die Durchführung geeignete autonome landwirtschaftliche Arbeitsmaschine 7 und des zumindest einen an der Arbeitsmaschine 7 adaptierten Anbaugerätes 8 unter Berücksichtigung der ausgewählten Bearbeitungsstrategie. Das Planungssystem 1 ist dazu eingerichtet, unter Verwendung von in der zumindest einen Datenbank 9 hinterlegten topografischen Daten des Feldes F, auf welchem für die autonome Arbeitsmaschine 7 der zu planende Gesamtprozess 19 oder der zumindest eine zu planenden Teilprozesse 20 durchzuführen ist bzw. sind, und den korrespondierenden feldspezifischen Parametern 10 des Feldes F ein digitales Abbild des Feldes F zu generieren und von den in der zumindest einen Datenbank 9 hinterlegten arbeitsmaschinenspezifischen und anbaugerätespezifischen Parametern 10 ein digitales Abbild der autonomen landwirtschaftlichen Arbeitsmaschine 7 und des zumindest einen an der Arbeitsmaschine 7 adaptierten Anbaugerätes 8 zu generieren, um mittels eines in der Speichereinheit 5 hinterlegten mathematischen Modells die Durchführung unter Berücksichtigung der Umgebungs- und Umweltparameter 11 zu simulieren und auf Basis der Simulation die Planung 6 zu generieren.

Vorteilhaft ist es, wenn das Planungssystem 1 dazu eingerichtet ist, die durch die Simulation generierte Planung 6 mittels der Benutzerschnittstelle 2, insbesondere visuell wahrnehmbar, auszugeben. Mittels der Benutzerschnittstelle 2 können nachträglich manuelle Änderungen von der Simulation zugrundeliegenden Rahmenbedingungen durchführbar sein. Das Planungssystem 1 ist des Weiteren dazu eingerichtet, die Simulation basierend auf den nachträglichen Änderungen erneut durchzuführen, um die generierte Planung 6 an nachträglich geänderte Rahmenbedingungen anzupassen. Änderungen von Rahmenbedingungen können, abhängig vom zeitlichen Abstand zwischen der Erstellung der Planung 6 und der vorgesehenen Durchführung des Gesamtprozesses 19 und/oder zumindest zweier aufeinander aufbauender Teilprozesse 20, auf kurzfristig aufgetretene oder weiter zurückliegende Ereignisse zurückgehen. Ein weiter zurückliegendes Ereignis kann beispielsweise eine Trockenperiode oder eine Regenperiode im Frühjahr sein, die im Zeitpunkt der Erstellung der Planung 6 unberücksichtigt geblieben ist. Kurzfristig auftretende Ereignisse können ein Kälteeinbruch oder ein Ausfall von Arbeitsmaschinen 7 und/oder Anbaugeräten 8 sein. Ebenso kann das Auftreten einer Regenphase zwischen zwei bereits geplanten, zeitlich aufeinanderfolgenden Teilprozessen 20 dazu führen, dass die Simulation unter geänderten Rahmenbedingungen erneut durchzuführen ist. Dies kann automatisch durch das Planungssystem 1 anlassbezogen automatisch erfolgen. Alternativ kann der Bediener 16 des Planungssystems 1 die erneute Simulation manuell veranlassen.

Das Planungssystem 1 ist dazu eingerichtet, mittels der Simulation generierte Arbeitsabläufe des Gesamtprozesses 19 und/oder des zumindest einen Teilprozesses 20 und damit verbundene Ergebnisgrößen 34, insbesondere Ressourcenverbrauch, gefahrene Strecke, Arbeitszeit, Arbeitsbeginn und Arbeitsende und dergleichen, mittels der Benutzerschnittstelle 2 zu visualisieren.

Das Planungssystem 1 ist weiterhin dazu eingerichtet, dass der Bediener 16 eine bestehende Route, die in der zumindest einen Datenbank 9 hinterlegt ist, auswählt und mit der abzuarbeitenden Erntekampagne 18 oder dem durchzuführenden Gesamtprozess 19 als Basisgrößen für die Simulation durch das Planungssystem 1 verknüpft. Wesentlich ist dabei, dass im Zuge der Simulation durch das Planungssystem 1 dem Bediener 16 bereits während der Erstellung der Planung 6 Optimierungsvorschläge unterbreitet werden.

Mittels der von dem Planungssystem 1 durchgeführten Simulation lassen sich entsprechend der ausgewählten Strategieoptionen 22 jeweils mehrere Vorschläge für Routenpläne 38a, 38b, 38c, 38d, zumindest einer Kombination aus autonomer Arbeitsmaschinen 7 und daran adaptierbarem Anbaugerät 8 und/oder Einstell- und/oder Effizienzparameter zur Steuerung, Regelung und/oder Parametrisierung der zumindest einen autonomen Arbeitsmaschine 7 und des zumindest einen Anbaugerätes 8 generieren, die Informationen zu Qualität, Zeitaufwand sowie Kosten-Ressourcenverbrauch umfassen. Diese Vorschläge werden mittels der Benutzerschnittstelle 2 visualisiert.

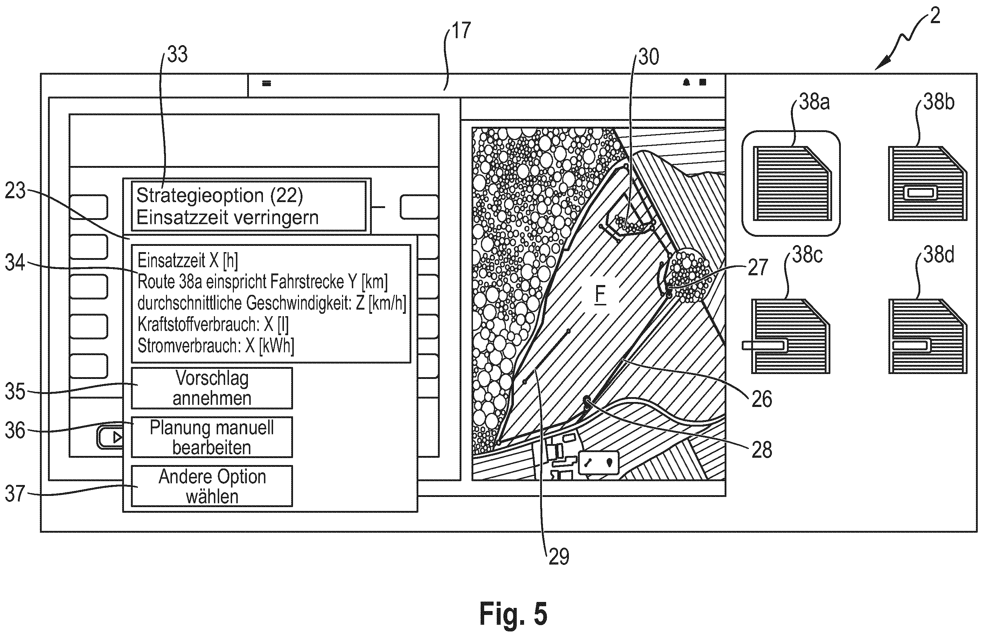

Hierzu sind in Fig. 5 schematisch und exemplarisch dem zu bearbeitenden Feld F mehrere simulierte Routenpläne 38a, 38b, 38c, 38d zugeordnet, von denen der Routenplan 38a exemplarisch hervorgehoben ist. Der Routenplan 38a ist der durch das Planungssystem 1 durchgeführten Simulation zur Erstellung der Planung 6 zugrunde gelegt. Die Auswahl des Routenplan 38a, 38b, 38c, 38d, welcher der simulierten Erstellung der Planung 6 zugrunde gelegt wird, kann durch das Planungssystem 1 selbsttätig vorgeschlagen werden und/oder durch den Bediener 16 manuell erfolgen bzw. geändert werden.

Im Anzeigesegment 23 wird für die ausgewählte Strategieoption 22 "Einsatzzeit verringern" ausgegeben. Für die Beurteilung der Strategieoption 22 "Einsatzzeit verringern" im Kontext mit der dem Routenplan 38a sind im Anzeigesegment 33 mittels der Simulation bestimmte Ergebnisgrößen 34 "Einsatzzeit", "Fahrstrecke", "durchschnittliche Geschwindigkeit", "Kraftstoffverbrauch" und/oder "Stromverbrauch" wiedergegeben. Dabei sind insbesondere die Ergebnisgrößen 34 "Kraftstoffverbrauch" bzw. "Stromverbrauch" abhängig von der Ausführung des Antriebs der Arbeitsmaschine 7 und/oder des Anbaugerätes 8.

In dem Anzeigesegment 23 dargestellte Auswahlelemente 35, 36, 37 ermöglichen es dem Bediener 16 zu entscheiden, wie mit der generierten Planung 6 zu verfahren ist. Dazu kann der Bediener 16 durch die Betätigung eines der Auswahlelemente 35, 36, 37 auswählen, ob dieser den "Vorschlag annehmen", die "Planung manuell bearbeiten" und/oder eine "andere Option auswählen" will. Die Auswahl eine "andere Option auszuwählen" kann die Auswahl einer alternativen Planung 6 beinhalten, welcher eine erneute Simulation des Gesamtprozesses 19 oder des Teilprozesses 20 durch das Planungssystem 1 zugrunde gelegt wird. Alternativ oder zusätzlich kann die Auswahl eine "andere Option auszuwählen" die Auswahl eines anderen Vorschlags der Routenpläne 38b, 38c, 38d umfassen.

Gemäß einem weiteren Aspekt kann das Planungssystem 1 zur Abarbeitung eines in der Speichereinheit 5 hinterlegten oder hinterlegbaren taktischen Lösungsweges eingerichtet sein, welcher eine optimierte Routenplanung und Vorgaben für optimierte Einstell- und/oder Effizienzparameter umfasst. Der Auswahl und Abarbeitung des taktischen Lösungsweges liegt die Auswahl der zu planenden Erntekampagne 18 und/oder Gesamtprozesses 19 und/oder des Teilprozesses 20 zugrunde. Anhand des taktischen Lösungsweges kann die Planung 6 unter Berücksichtigung der verfügbaren arbeitsmaschinenspezifischen, anbaugerätespezifischen und feldspezifischen Parameter 10 sowie Umgebungs- und Umweltparameter 11 durchgeführt werden.

**Bezugszeichenliste**

| | | | |
|---|---|---|---|
| 1 | Planungssystem | 34 | Ergebnisgröße |
| 2 | Benutzerschnittstelle | 35 | Auswahlelement |
| 3 | Kommunikationseinheit | 36 | Auswahlelement |
| 4 | Recheneinheit | 37 | Auswahlelement |
| 5 | Speichereinheit | 38a | Routenplan |
| 6 | Planung | 38b | Routenplan |
| 7 | Autonome Arbeitsmaschine | 38c | Routenplan |
| 8 | Anbaugerät | 38d | Routenplan |
| 9 | Datenbank | | |
| 10 | Parameter | F | Feld |
| 11 | Parameter | | |
| 12 | Netzwerk | | |
| 13 | Webseite | | |
| 14 | Datenquelle | | |
| 15 | Farmmanagementsystem | | |
| 16 | Bediener | | |
| 17 | Benutzeroberfläche | | |
| 18 | Erntekampagne | | |
| 19 | Gesamtprozess | | |
| 20 | Teilprozess | | |
| 21 | Abfragedialog | | |
| 22 | Strategieoption | | |
| 23 | Anzeigesegment | | |
| 24 | Auswahlfenster | | |
| 25 | Checkbox | | |
| 26 | Feldgrenze | | |
| 27 | Startpunkt | | |
| 28 | Endpunkt | | |
| 29 | Referenzlinie | | |
| 30 | Hindernis | | |
| 31 | Spalte | | |
| 32 | Icon | | |
| 33 | Anzeigesegment | | |

## Patentansprüche

1. Planungssystem (1), umfassend eine Benutzerschnittstelle (2), eine Kommunikationseinheit (3), eine Recheneinheit (4) und eine Speichereinheit (5), wobei das Planungssystem (1) dazu eingerichtet ist, eine Planung (6) zur Durchführung eines landwirtschaftlichen Gesamtprozesses (19) oder zumindest eines vom Gesamtprozess (19) umfassten Teilprozesses (20) zu generieren und an eine für die Durchführung eingerichtete autonome landwirtschaftliche Arbeitsmaschine (7) zur Steuerung, Regelung und/oder Parametrisierung der autonomen Arbeitsmaschine (7) und zumindest eines an der Arbeitsmaschine (7) adaptierten Anbaugerätes (8) zu übertragen, **dadurch gekennzeichnet, dass** die Benutzerschnittstelle (2) dazu eingerichtet ist, eine in der Speichereinheit (5) hinterlegte und/oder hinterlegbare Übersicht landwirtschaftlicher Gesamtprozesse (19) sowie von diesen umfasste Teilprozesse (20) zumindest einer Erntekampagne (18) einem Bediener (16) anzuzeigen und zur individuellen Auswahl zu stellen, wobei das Planungssystem (1) dazu eingerichtet ist, nach Auswahl eines Gesamtprozesses (19) oder eines Teilprozesses (20) und Auswahl von einer aus mehreren in der Speichereinheit (5) hinterlegten und/oder hinterlegbaren Strategievorgaben (22) in Abhängigkeit der ausgewählten Strategievorgabe (22) Einstell- und/oder Effizienzparameter zur Steuerung, Regelung und/oder Parametrisierung der zumindest einen autonomen Arbeitsmaschine (7) und des zumindest einen Anbaugerätes (8) zu generieren.

2. Planungssystem (1) nach Anspruch 1, **dadurch gekennzeichnet, dass** das Planungssystem (1) dazu eingerichtet ist, die verfügbare Auswahl von Strategievorgaben (22) in Abhängigkeit von dem vorzugebenen Gesamtprozess (19) oder Teilprozess (20), der Verfügbarkeit von autonomen Arbeitsmaschinen (7) und/oder an diese adaptierbaren Anbaugeräten (8) im Planungszeitraum und in Abhängigkeit von äußeren Bedingungen zu beschränken.

3. Planungssystem (1) nach Anspruch 1 oder 2, **dadurch gekennzeichnet, dass** die Strategievorgaben (22) Optimierungskriterien aufweisen, welche Effizienz, Leistung, Qualität, Bodenschonung, Kosten, Ressourcenverfügbarkeit und/oder Verluste umfassen.

4. Planungssystem (1) nach einem der Ansprüche 1 bis 3, **dadurch gekennzeichnet, dass** die Benutzerschnittstelle (2) zur Eingabe und/oder Auswahl zumindest eines durchzuführenden Gesamtprozesses (19) oder Teilprozesses (20) sowie einer damit verbundenen Route eingerichtet ist, wobei das Planungssystem (1) dazu eingerichtet ist, unter Verwendung von in der zumindest einer Datenbank (9) hinterlegten topografischen Daten eines Feldes (F), auf welchem der für die autonome Arbeitsmaschine (7) zu planende Gesamtprozess (19) oder Teilprozess (20) durchzuführen ist, und den korrespondierenden feldspezifischen Parametern (10) des Feldes (F) ein digitales Abbild des Feldes (F) zu generieren und von den in der zumindest einen Datenbank hinterlegten arbeitsmaschinenspezifischen und anbaugerätspezifischen Parametern (10) ein digitales Abbild der autonomen landwirtschaftlichen Arbeitsmaschine (7) und des zumindest einem an der Arbeitsmaschine (7) adaptierten Anbaugerätes (8) zu generieren, um mittels eines in der Speichereinheit (5) hinterlegten mathematischen Modells die Durchführung des Gesamtprozesses (19) oder Teilprozesses (20) und ein daraus resultierendes Arbeitsergebnis zu simulieren.

5. Planungssystem (1) nach Anspruch 4, **dadurch gekennzeichnet, dass** das Planungssystem (1) dazu eingerichtet ist, das Arbeitsergebnis und damit verbundene Ergebnisgrößen (34) der simulierten Durchführung mittels der Benutzerschnittstelle (2) auszugeben.

6. Planungssystem (1) nach Anspruch 4 oder 5, **dadurch gekennzeichnet, dass** das Planungssystem (1) dazu eingerichtet ist, das Arbeitsergebnis beeinflussende Umgebungs- und Umweltparameter (11) im Zeitpunkt der Simulation zu berücksichtigen und in Abhängigkeit vom Einflussgrad der Umgebungs- und Umweltparameter (11) auf das Arbeitsergebnis Vorschläge zur Optimierung der Einstell- und/oder Effizienzparameter auszugeben.

7. Planungssystem (1) nach einem der Ansprüche 4 bis 6, **dadurch gekennzeichnet, dass** das Planungssystem (1) dazu eingerichtet ist, die Simulation unter Berücksichtigung der in der Speichereinheit (5) hinterlegten und/oder hinterlegbaren Strategievorgaben (22), insbesondere hinsichtlich einer Optimierung der Bearbeitungsleistung, Bearbeitungseffizienz und/oder Bearbeitungsqualität, durchzuführen.

8. Planungssystem (1) nach einem der vorangehenden Ansprüche, **dadurch gekennzeichnet, dass** das Planungssystem (1) dazu eingerichtet ist, in Abhängigkeit von der Auswahl des zumindest einen Gesamtprozesses (19) und/oder des zumindest einen Teilprozesses (20) automatisch eine Datenbasis geeigneter und verfügbarer autonomer Arbeitsmaschinen (7) und an die Arbeitsmaschinen (7) adaptierbarer Anbaugeräte (8) zu erstellen und die Datenbasis mittels der Benutzerschnittstelle (2) zu visualisieren und zur individuellen Auswahl zu stellen.

9. Planungssystem (1) nach Anspruch 8, **dadurch gekennzeichnet, dass** das Planungssystem (1) dazu eingerichtet ist, automatisch zumindest einen Vorschlag für eine Kombination aus wenigstens einer geeigneten und verfügbaren autonomen Arbeitsmaschine (7) und wenigstens einem daran adaptierbaren Anbaugerät (8) zu generieren und mittels der Benutzerschnittstelle (2) zu visualisieren.

10. Planungssystem (1) nach einem der vorangehenden Ansprüche, **dadurch gekennzeichnet, dass** das Planungssystem (1) zur Abarbeitung eines in der Speichereinheit (5) hinterlegten oder hinterlegbaren taktischen Lösungsweges eingerichtet ist, welcher eine optimierte Routenplanung und Vorgaben für optimierte Einstell- und/oder Effizienzparameter umfasst.

11. Planungssystem (1) nach einem der vorangehenden Ansprüche, **dadurch gekennzeichnet, dass** das Planungssystem (1) dazu eingerichtet ist, die generierte Planung vor der Durchführung des geplanten Gesamtprozesses (19) oder Teilprozesses (20), insbesondere innerhalb eines vorgebbaren zeitlichen Abstands vor der Durchführung, mittels der Benutzerschnittstelle (2) zu visualisieren.

12. Planungssystem (1) nach Anspruch 11, **dadurch gekennzeichnet, dass** das Planungssystem (1) dazu eingerichtet ist, automatisch zu prüfen, ob in der zumindest einen Datenbank (9) eine Aktualisierung der Daten erfolgt ist, welche im Zeitpunkt der Generierung der Planung (6) verwendet wurden, und dies mittels der Benutzerschnittstelle (2) zu visualisieren.

13. Planungssystem (1) nach einem der vorangehenden Ansprüche, **dadurch gekennzeichnet, dass** das Planungssystem (1) dazu eingerichtet ist, bei der Generierung der Planung (6) dem durchzuführenden Gesamtprozess (19) oder Teilprozess (20) zeitlich vorgelagerte und/oder nachgelagerte Gesamtprozesse (19) oder Teilprozesse (20) und/oder eine in einem zeitlich vorgelagerten Gesamtprozess (19) oder Teilprozess (20) generierte Routenplanung und/oder durch eine landwirtschaftliche Arbeitsmaschine (7) abgefahrene Route zu berücksichtigen.

14. Planungssystem (1) nach einem der vorangehenden Ansprüche, **dadurch gekennzeichnet, dass** das Planungssystem (1) dazu eingerichtet ist, automatisch einen Vorschlag für die zu generierende Planung (6) für den durchzuführenden Gesamtprozess (19) und/oder Teilprozess (20) basierend auf von in einem in der Vergangenheit liegenden Vergleichszeitraum manuell erfassten Daten desselben Gesamtprozesses (19) und/oder Teilprozesses (20) an derselben Lokation und/oder basierend auf Vergleichsdaten desselben Gesamtprozesses (19) und/oder Teilprozesses (20) an zumindest einer anderen Lokation zu generieren und mittels der Benutzerschnittstelle (2) zur Auswahl zu stellen.

15. Planungssystem (1) nach einem der vorangehenden Ansprüche, **dadurch gekennzeichnet, dass** das Planungssystem (1) dazu eingerichtet ist, ein künstliches neuronales Netzwerk verwendet, um die Vergleichsdaten, welche die in der Vergangenheit verwendeten arbeitsmaschinenspezifischen, anbaugerätespezifischen und feldspezifischen Parameter (10) sowie Umgebungs- und Umweltparameter (11) repräsentieren, als Eingangsdatensatz auszuwerten und als Ausgangsdaten die darauf basierende Planung (6) zu bestimmen.
